(19) Europäisches Patentamt
European Patent Office
Office européen des brevets

(11) EP 3 825 982 A1

(12) EUROPEAN PATENT APPLICATION

(43) Date of publication:
26.05.2021 Bulletin 2021/21

(51) Int Cl.:
G08G 3/02 (2006.01)

(21) Application number: 19211016.1

(22) Date of filing: 22.11.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(71) Applicant: BSB Artificial Intelligence GmbH
4030 Linz (AT)

(72) Inventors:
• BIANCALE, Raphaël
4030 LINZ (AT)
• TOUNSI, Asmae
4030 LINZ (AT)

(74) Representative: Argyma
14 Boulevard de Strasbourg
31000 Toulouse (FR)

(54) DETECTION OF A RISK OF COLLISION BETWEEN A BOAT AND A LUMINOUS OBJECT

(57) The invention relates to a method of detecting a risk of collision between a boat and an object in a water area using a camera module mounted on said boat, said camera module comprising a RGB camera, said boat being characterized by its course, said method comprising the steps of generating (S1) at least one sequence of images using said camera,
- detecting (S2) at least one light source in the images of the at least one sequence of images, said at least one light source being mounted on a luminous object located in the water area,
- calculating (S5) a series of polar angles between the boat and the at least one light source using the images of the at least one sequence of images,
- estimating (S6) the course direction of the object with regard to the boat by deriving said series of calculated polar angles with respect to time,
- detecting (S9) a risk of collision between the boat and the object when the estimated course direction of the object leads said object towards the course of the boat.

FIGURE 7

EP 3 825 982 A1

**Description**

**General technical field**

The invention relates to boat safety and more particularly to a method and device for avoiding collision between a boat and a luminous object in a water area such as e.g. an ocean, a sea or a lake. The present invention aims in particular at providing a solution of boat-embedded system which allows avoiding the collision of a boat with a luminous object located in a water area.

**State of the art**

It is known in the art to equip a boat with a system for detecting objects, like e.g. other boats, and avoid therefore a collision. Common detection systems include a RADAR device which sends waves that can reflect on the objects. Thus, when reflected waves are received by the RADAR device along a particular direction and after a measured time, the RADAR device can detect the direction and the distance of the object. Such type of RADAR device works on day time as well as on night time, but cannot identify the objects otherwise than using their shape.

Another type of boat-embedded device uses a camera for detecting objects. In a first solution, the camera is of the RGB (Red Green Blue) type, known in the art, and allows manually detecting objects. In other words, the RGB camera generates images which are displayed on a screen and an operator analyses the images displayed on the screen to detect any object that could be dangerous for the boat. However, such system may only be used during day time as images are mainly dark during night time. In a second solution, the camera is of the thermal type and allows also manually detecting objects on a screen, but in this case, images show a thermal representation of the environment, allowing therefore detecting objects also at night time. However, thermal cameras are expensive.

Furthermore, the existing systems only allow identifying objects using their shape and distance, which may prove to be inaccurate and dangerous in some situations. Also, in these solutions, an operator, e.g. the skipper of the boat, monitors the images on a screen to detect the objects, which is time-consuming for said operator and prevents him of performing other tasks, which could even be dangerous if the operator is alone on the boat.

There is thus a need for a simple, cheap, reliable and efficient solution that allows to remedy at least partially these drawbacks.

**General presentation of the invention**

To this aim, the invention provides a method of detecting a risk of collision between a boat and a luminous object in a water area using a camera module mounted on said boat, said camera module comprising a RGB camera, said boat being characterized by its course, said method comprising the steps of:

- generating at least one sequence of images using said camera,
- detecting at least one light source in the images of the at least one sequence of images, said at least one light source being mounted on said luminous object,
- calculating a series of polar angles between the boat and the at least one light source using the images of the at least one sequence of images,
- estimating the course direction of the object with regard to the boat by deriving said series of calculated polar angles with respect to time,
- detecting a risk of collision between the boat and the object when the estimated course direction of the object leads said object towards the course of the boat.

The method according to the invention allows to automatically estimate the course direction of an illuminated object at night in a water area (e.g. an open sea area) and detecting a risk of collision between the boat and said luminous object. The use of a RGB (Red Green Blue) camera renders the system cheap, simple and easy to use while being accurate for securing the course of the boat.

In an embodiment, the method comprises, consequently to the risk detection, a step of triggering an alarm. The alarm may be a sound, a display or a command.

In an embodiment, the method comprises a step of avoiding the object based on the estimated course direction of said object.

This collision avoidance may be realized manually (e.g. by the skipper of the boat) consequently to the alarm triggering or automatically (e.g. by the autopilot module of the boat when the boat is provided with such an autopilot module) consequently to the risk detection or to the alarm triggering. For example, if the alarm is a sound alarm or a display alarm (e.g. on a control screen of the boat), the skipper may manoeuvre the boat to avoid the object. If the alarm is a command alarm, the alarm command may be sent directly to the autopilot of the boat to manoeuvre the boat and avoid the object. If there is no alarm, the risk detection may trigger automatically the collision avoidance through the autopilot module.

In an embodiment, the series of polar angles is calculated using a rotation matrix from an image plan of the images to a boat reference frame coordinate system of the boat for each image of the sequence of images. The use of a rotation matrix is a simple manner to calculate the series of polar angles.

In an embodiment, the method comprises, before the step of calculating a series of polar angles, a step of estimating the distance between the boat and the at least one light source using the images of the at least one sequence of images. This estimation of the distance may be realized using the distance in pixels between the boat and the object on the images and/or using translation and rotation matrixes between the image plan of the images, the camera and the boat. The distance gives an extra information to improve collision avoidance.

In an embodiment, the estimation of the distance between the boat and the at least one light source comprises:

- determining the position of the at least one light source in pixel coordinates in an image of the sequence of images,
- calculating the distance of the at least one light source by applying a transformation matrix from a camera's reference frame coordinate system to a boat's reference frame coordinate system to the determined position,
- calculating the real position of the object using the calculated distance and the determined position,
- estimating the real distance between the boat and the object using said calculated real position.

In an embodiment, the estimation of the course direction of the object with regard to the boat comprises estimating the angular speed of the object using said series of calculated polar angles. The angular speed gives a basic, but extra information to improve collision avoidance.

According to an aspect of the invention, the method comprises a step of estimating the linear speed of the object using the estimated distance and said series of calculated polar angles. The linear speed gives an extra relevant information to improve collision avoidance.

In an embodiment, the estimation of the linear speed of the object comprises deriving the estimated position of the object with respect to time to obtain a resulting vector, and then calculating the magnitude of said resulting vector.

In an embodiment, the method comprising a step of determining the colour of the at least one detected light source. The colour of the lights may give an indication of the type of luminous object, in particular according to the International Association of Marine Aids to Navigation and Lighthouse Authorities (IALA).

In an embodiment, the method comprises a step of identifying the object in order to improve the collision avoidance.

The identification of the object may be realized using the estimated course direction of the object and/or the linear speed of the object and/or the angular speed of the object and/or the number of light(s) of the object and/or the configuration of the lights on the object and/or the determined colour of the light(s) of the object.

In an embodiment, the method comprises, before the step of detection of at least one light source, a step of detecting a night condition using the colour distribution in the images of said sequence of images.

In an embodiment, the detection of the at least one light source comprises determining the colour if the pixels of the image and detecting a light source when the level of colour of a group of pixels is greater than a brightness threshold.

The invention also relates to a system for detecting a risk of collision between a boat and a luminous object in a water area, said system being intended to be mounted on-board said boat and comprising a camera module and a processing module connected to said camera module via a communication link, said camera module comprising a RGB camera configured to generate at least one sequence of images using said camera and send said generated at least one sequence of images to the processing module, said boat being characterized by its course, said processing module being configured to:

- detect at least one light source in the images of the sequence of images, said at least one light source being mounted on said object,
- calculate a series of polar angles between the boat and the at least one light source using the images of the sequence of images,
- estimate the course direction of the object with regard to the boat by deriving said series of calculated polar angles with respect to time,
- detect a risk of collision between the boat and the object when the estimated course direction of the object leads said object towards the course of the boat.

In an embodiment, the processing module is configured to trigger an alarm.

The object may be avoided manually by the skipper of the boat consequently to said alarm trigger.

In an embodiment, the processing module is configured to automatically avoid the object based on the estimated course direction of said object. The processing module may be configured to control the boat, directly or via an automatic pilot module, in order to avoid the object using the estimated course direction of the object.

In an embodiment, the processing module is configured to calculate the polar angles using a rotation matrix from the image plan to a boat reference frame coordinate system for each image of the sequence of images.

In an embodiment, the processing module is configured to estimate the distance between the boat and the at least one light source using the images of the sequence of images. This estimation may be realized using the distance in pixels between the boat and the object on the images and/or translation and rotation matrixes between the image plan of the images, the camera and the boat.

In an embodiment, for estimating the distance between the boat and the at least one light source, the processing module is configured to:

- determine the position of the at least one light source in pixel coordinates in an image of the sequence of images,
- calculate the distance of the at least one light source by applying a transformation matrix from a camera's reference frame coordinate system to a boat's reference frame coordinate system to the determined position,
- calculate the real position of the object using the calculated distance and the determined position,
- estimate the real distance between the boat and the object using said calculated real position.

In an embodiment, the processing module is configured to estimate the angular speed of the object using said series of calculated polar angles.

In an embodiment, the processing module is configured to estimate the linear speed of the object using said estimated distance and said series of calculated polar angles.

In an embodiment, for estimating the linear speed of the object, the processing module is configured to derive the estimated position with respect to time, and then calculate the magnitude of the resulting vector.

In an embodiment, the processing module is configured to determine the colour of the at least one detected light source.

In an embodiment, the processing module is configured to identify the object.

In an embodiment, the processing module is configured to identify the object using the estimated course direction of the object and/or the angular speed of the object and/or the linear speed of the object and/or the number of light(s) of the object and/or the configuration of the lights on the object and/or the determined colour of the light(s) of the object.

In an embodiment, the processing module is configured to detect a night condition using the colour distribution in the images of said sequence of images.

In an embodiment, the processing module is configured to determine the colour if the pixels of the image and detect a light source when the level of colour of a group of pixels is above a brightness threshold.

The invention also relates to a boat comprising a system as described previously. The boat may be e.g. a sailing boat, a racing boat, a ship or any kind of vessel.

In an embodiment, the boat comprise a hull and a mast, wherein the camera module is mounted on said mast.

**FIGURES**

[Fig 1]: Figure 1 schematically illustrates an exemplary embodiment of a boat according to the invention.

[Fig 2]: Figure 2 is another view of the boat of figure 1.

[Fig 3]: Figure 3 illustrates an exemplary embodiment of a camera module of the system according to the invention.

[Fig 4]: Figure 4 illustrates an exemplary embodiment of a camera reference frame coordinate system and a boat reference frame coordinate system.

[Fig 5]: Figure 5 illustrates an exemplary embodiment of a camera reference frame coordinate system.

[Fig 6]: Figure 6 illustrates an exemplary embodiment of an image plan in the camera reference frame coordinate system and in the boat reference frame coordinate system.

[Fig 7]: Figure 7 illustrates an exemplary embodiment of the method according to the invention.

**DETAILED DESCRIPTION**

The collision avoiding system according to the invention allows to detect and avoid an object in a water area during night time using a camera module mounted on a boat. The water area may be an ocean, a sea, a lake or any water area suitable for a boat. The boat may be a sailing boat or a motorboat. Preferably, the boat is a racing boat or a cruising boat.

Boat 1

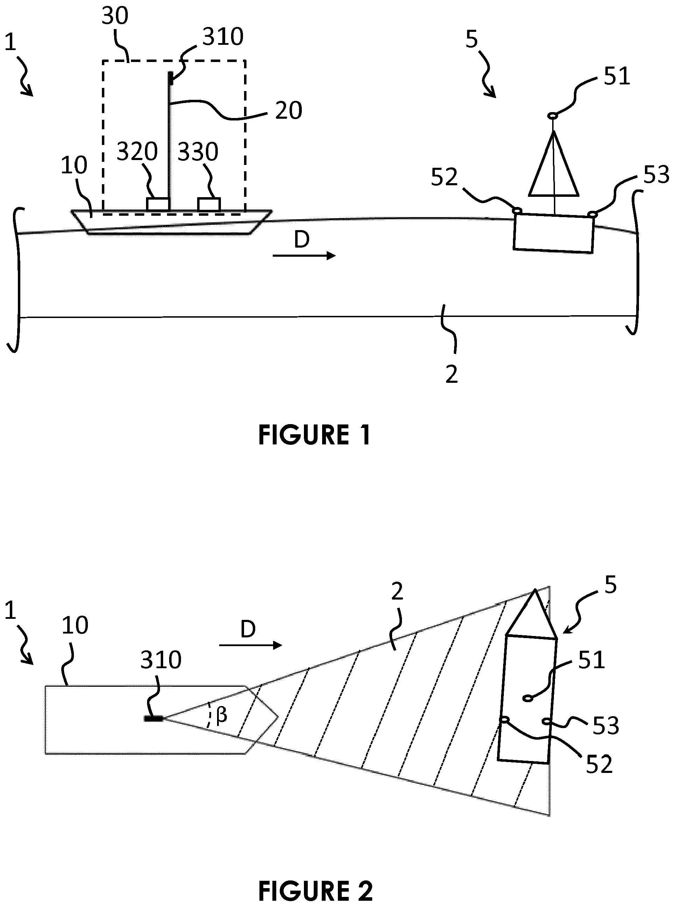

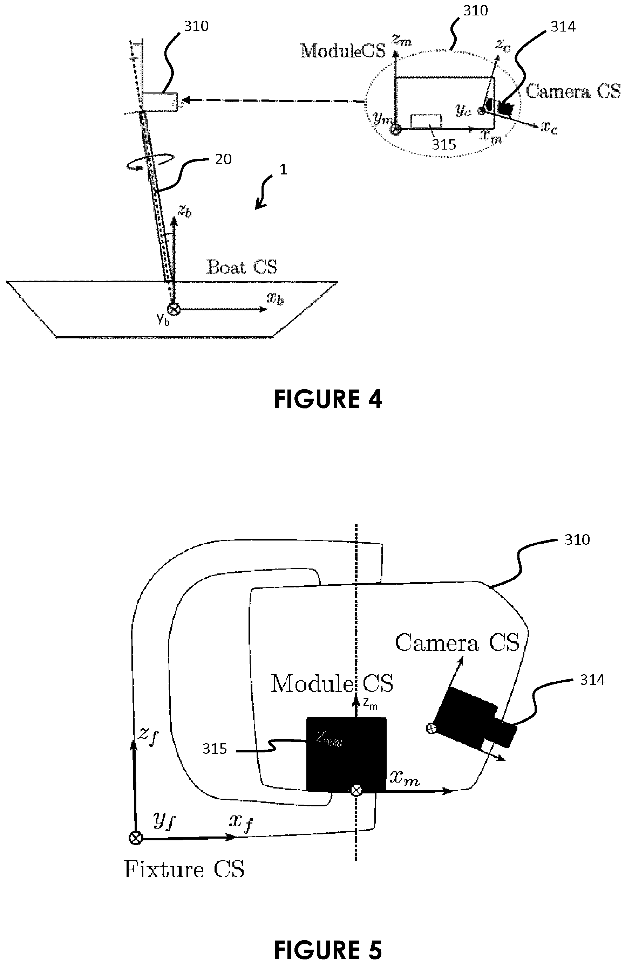

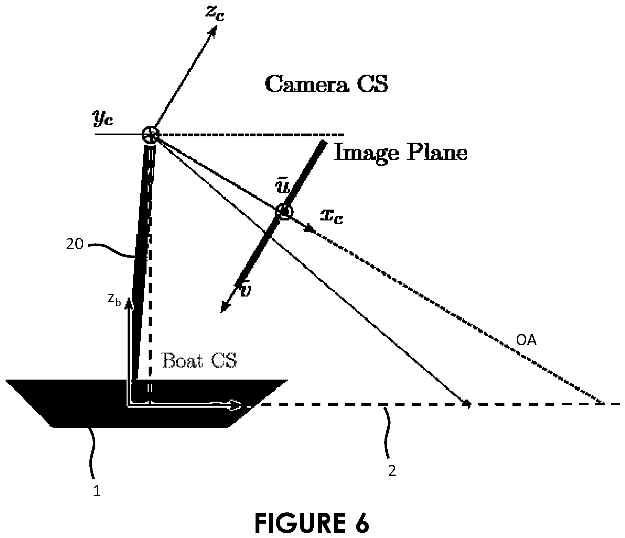

Figure 1 illustrates a boat 1 according to the invention navigating in a water area 2 in a direction D toward another vessel 5. In this non-limiting example, the boat 1 is a sailing boat and comprises a hull 10, a mast 20 and a collision avoidance system 30 according to the invention. As illustrated on figures 4 and 6, a boat 1 reference frame coordinate system ($x_b$, $y_b$, $z_b$), called "Boat CS", is associated to the boat 1. As shown on figure 5, a mast 20 reference frame coordinate system ($x_f$, $y_f$, $z_f$), called "Fixture CS", is associated to the mast 20. The boat 1 is characterized by its course, which may be static (i.e. fixed) or dynamic (movement).

System 30

As illustrated on Figure 1, the system 30 comprises a camera module 310, a processing module 320 and a navigation module 330.

Camera module 310

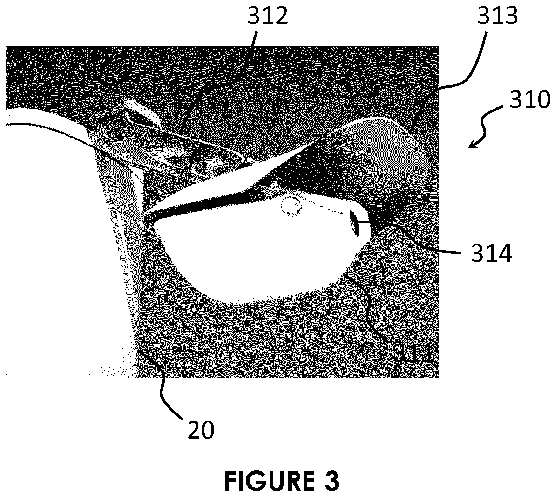

In reference to figure 3, the camera module 310 comprises a housing 311, an arm 312, a cover plate 313, a RGB camera 314 and a sensor 315 (shown on figures 4 and 5). As illustrated on figures 4 and 5, a camera module 310 reference frame coordinate system ($x_m$, $y_m$, $z_m$), called "Module CS", is associated to the camera module 310. As illustrated on figures 4 to 6, a camera 314 reference frame coordinate system ($x_c$, $y_c$, $z_c$), called "Camera CS", is associated to the camera 314. As illustrated on Figure 6, the camera 314 is associated with an image plane (called "Image Plane") in which the images are generated. The Image Plane is perpendicular to the optical axis OA of the camera 314 and defines an image reference frame coordinate system ($\overline{u}$, $\overline{v}$) in pixels.

The camera 314 and the sensor 315 are mounted in the housing 311. The camera 314 is of the RGB (Red Green Blue) type, known in the art. As shown on figure 2, the camera 314 is oriented toward the front of the boat 1 to generate images showing the front environment of the boat on an angular width $\beta$. The sensor 315 is for example of the MEMS type and allows to measure acceleration and gyroscopic data along the three-dimensional axes of the camera 314 reference frame coordinate system.

The housing 311 is mounted on the mast 20 via the arm 312. The cover plate 313 allows to protect the camera 314 from the sun rays. In the example described below, the camera module 310 comprises a single camera 314 for the sake of clarity. However, in another embodiment, the camera module 310 might comprise a plurality of cameras, for example one RGB camera 314 and other cameras (RGB, thermal, etc.). The camera 314 is configured to generate a sequence of coloured images and send said sequence of images to the processing module 320, for example at a frame rate of 3 to 4 images per second. The images are set in the Image Plane, as illustrated on figure 6.

In this example, the camera module 310 is advantageously mounted at the top of the mast 20 in order to allow the camera 314 to generate sequence of images showing a wide shot of the environment (water area 2) and improve therefore the accuracy of the identification of objects like the vessel 5. A sequence of image may comprise one or several images, for example 25, 30, 50, 60, 100 or more images.

At night time, objects such as e.g. boats, ships or lighthouses, must use lights in order to be recognized and identified. Navigation lights help boaters determine the give-way vessel when encountering each other at night. These lights must be displayed from sunset to sunrise and during periods of restricted visibility, such as fog. There are four common navigation lights: sidelights, sternlights, masthead lights and all-round white lights. Sidelights (also called combination lights) are red and green lights because they are visible to another vessel approaching from the side or head-on. The red light indicates a vessel's port (left) side; the green indicates a vessel's starboard (right) side. The sternlight is a white light, which is seen only from behind or nearly behind the vessel. The masthead light is a white light, which shines forward and to both sides and is required on all power-driven vessels. On power-driven vessels less than 12 meters / 39.4 feet in length, the masthead light and sternlight may be combined into an all-round white light; power-driven vessels 12 meters / 39.4 feet in length or longer must have a separate masthead light. A masthead light must be displayed by all vessels when under engine power. The absence of this light indicates a sailing vessel because sailboats under sail display only sidelights and a sternlight. The all-round white light concerns on power-driven vessels less than 12 meters / 39.4 feet in length, this light may be used to combine a masthead light and sternlight into a single white light that can be seen by other vessels from any direction. This light serves as an anchor light when sidelights are extinguished.

In the example of figures 1 and 2, the vessel 5 comprises a white masthead light 51, a red left sidelight 52 and a green right sidelight 53.

Processing module 320

The processing module 320 is configured to receive sequences of images generated by the camera 314 and, for a given received sequence of images:

- detect light sources 51, 52, 53 in the images of the sequence of images,
- calculate a series of polar angles between the boat 1 and the light sources 51, 52, 53 using the images of the sequence of images,
- estimate the course direction of the vessel 5 using said series of calculated polar angles. The course of the vessel 5 may be static (i.e. fixed) or dynamic (movement of the vessel 5). The course direction of the vessel 5 may be to the left, right or static with regard to the boat 1,
- detect a risk of collision between the boat 1 and the vessel 5 when the estimated course direction of the vessel 5 leads said vessel 5 towards the course of the boat 1.

In the preferred embodiment described hereafter, the processing module 320 is further configured to:

- estimate the distance between the boat 1 and the light sources 51, 52, 53 using the images of the sequence of images,
- estimate the angular speed of the vessel 5 using the series of calculated polar angles,
- estimate the linear speed of the vessel 5 using said estimated distance and said series of calculated polar angles,
- determine the colour of the detected light sources 51, 52, 53,
- identify the vessel 5 using the estimated course direction and, advantageously, the determined colour of the light sources 51, 52, 53 and/or the estimated angular speed of the vessel 5 and/or the estimated linear speed of the vessel 5 and/or the number of lights and/or the configuration of the lights (white masthead, left red, green right).

Preferably, the processing module 320 is configured for processing the received images at the same frequency that the frame rate of the camera 314, for example 3 to 4 images per second. The processing module 320 may process each image of the sequence when it is received or store a batch of images and process the whole sequence of images at once.

Preferably, the processing module 320 is configured to detect a night-time condition using a received sequence of images. More precisely, the processing module 320 is configured to determine the colour distribution in the sequence of images. To this end, the processing module 320 is configured to determine the level of darkness of each pixel of the images. An image generated by a camera 314 consists in one image coded using levels of red, one image coded using levels of green and one image coded using levels of blue. For example, levels of red, green and blue may each vary from 0 to 255. The level (0, 0, 0) correspond to the black colour whereas the level (255, 255, 255) corresponds to the white colour. The level of darkness, also called luminance, may be computed by calculating the mean of the three level values. It is a weighted mean with more weight attributed to the green colour and less to blue.

Therefore, when the luminance of a pixel is smaller than a predetermined darkness threshold, for example 50 or 100, the pixel is considered as being dark. When the percentage of dark pixels of each image of the sequence of pixels exceeds a predefined night-condition threshold, for example 80 %, the processing module 20 determines that the boat 1 navigates at night time.

Navigation module 330

The navigation module 330 allows the skipper to navigate the boat 1. In particular, the navigation module 330 collects data from sensors or modules of the boat 1, such as e.g. the location, the heading or the speed of the boat 1.

The camera module 310, the processing module 320 and the navigation module 330 are linked by a communication bus (not represented) which allows the camera module 310 to send images and sensor 315 data to the processing module 320 and the navigation module 330 to send navigation data, such as e.g. the localisation, the heading and the speed of the boat 1, to the processing module 320.

Method

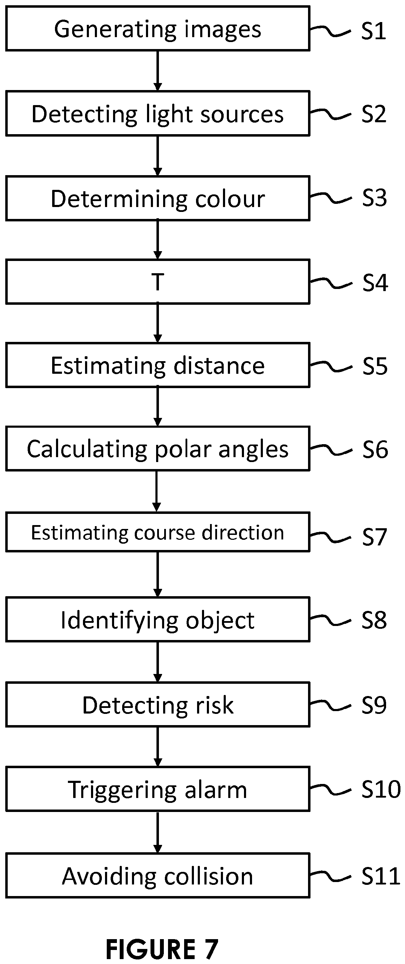

An embodiment of the method according to the invention will now be described in reference to figure 7. In this example, the boat 1 navigates in an open sea and the vessel 5 is in the field of the camera 314 of the camera module 310.

Images generation (step S1)

At first, the camera 314 generates a sequence of images in a step S1. These images are sent by the camera 314 to the processing module 320. The processing module 320 may first detect if the boat 1 navigates in day or night conditions using a first received set of images. If the processing module 320 detects a night condition, it performs automatically the following step S2 to S7 on each image (i.e. each iteration of the method), otherwise, no further action is realized.

Light source detection (step S2) and colour determination (step S3)

Ship lights or lighthouse lights appear on the images of a sequence as an illuminated pixel or group of illuminated pixels. As previously detailed, the color of each light source area corresponding to a ship light 51, 52, 53 may be red, green or white. The light of a lighthouse may be red, green, white or yellow and may be blinking. In the latter case, if the light source does not appear in all the images of the sequence of images, the processing module 20 may determine that the light source is blinking. In any case, the detection of a light source 51, 52, 53 corresponds to the detection of an object that should thus be avoided, for example the vessel 5 in this example.

At night time, the representation of a light source 51, 52, 53 on an image has a drastically different colour distribution from the rest of the image, in particular in an open sea environment. Detection of light sources 51, 52, 53 in a sequence of images may be done using conventional image thresholding methods as described here above. In particular, the colour of each light source area may be determined mainly red, green or white as previously detailed.

In particular, when the luminance of a pixel is greater than a predetermined brightness threshold, for example 200 or 250, the pixel is considered as being bright. When the pixels of a group of pixels of an image are bright, the processing module 320 determines that said group of pixels corresponds to a light source 51, 52, 53. The detection might also be done using more complex methods, for example a Convolutional Neural Network (CNN) that contains image enhancement layers, or any other unsupervised adapted method.

Transformation matrix T (step S4)

The processing module 320 calculates a transformation matrix T which allows switching from the camera 314 reference frame coordinates system (Camera CS) to the boat 1 reference frame coordinates system (Boat CS). The transformation matrix T can be directly calculated using the mounting parameters of the camera module 310 on the mast 20, comprising the mast 20 length, the rake angle (inclination of the camera 314) and the distance from the mast 20 to the front of the boat 1. In other words, the transformation matrix T is a composite matrix of the rotation matrix resulting from the camera module 310 angles (raw, pitch, yaw), the rotation and translation from the camera 314 reference frame coordinate system (Camera CS) to the mast 20 reference frame coordinate system (Fixture CS) using the fall-back angle, the mast 20 rake and the mast 20 height, and finally a translation to the front of the boat 1.

More precisely, at each iteration (i.e. processing one image), the kinematics model of the system 30, initialized using the mounting parameters, is updated with the information collected by the boat 1 bus data, especially the speed of the boat 1, provided by the navigation module 330 and the data from the sensor 315 of the camera module 310. The kinematics model is the study of the movement of the camera module 310 in relation to the movement of the boat 1 itself, in order to define a transformation matrix T to map anything that is seen in the image into the boat 1 reference frame coordinate system (Boat CS). The model has fix parameters (mast 20 height, mast 20 rake, mounting angle of the camera module 310, camera 314 fall-back angle, etc.), while other parameters may be ignored (e.g. the mast 20 rotation because it may be compensated), and variable parameters that change over time (movements of the boat's 1 and gyroscopic data). The variable parameters can be synchronized on each iteration with the image data, enabling for the update of the transformation matrix T.

Distance estimation (step S5)

First of all, the vessel 5 appears on the image at a position P, called "real position P" in pixel coordinates on the image in the camera 314 reference frame coordinate system (Camera CS), and is considered to be located at a distance R, called "real distance", from the boat 1 in the boat 1 reference frame coordinate system (Boat CS).

The white masthead light source 51 is mounted at a height h and appears on the image at a position $P_{light}$, called "light position $P_{light}$", in pixel coordinates in the camera 314 reference frame coordinate system (Camera CS) and can be perceived after a projection from the camera 314 reference frame coordinate system to the boat 1 reference frame coordinate system (Boat CS) as located at a distance $R_{light}$ to the light, called "light distance" $R_{light}$".

$P_{light}$ calculation

The light position $P_{light}$ is an output of step S2 of light source detection. It is the location of the light source in the 2D camera 314 reference frame coordinate system (Camera CS). More precisely, the light position $P_{light}$ can be written: $P_{light} = (P_{light}(0), P_{light}(1))$, where $P_{light}(0)$ and $P_{light}(1)$ are the coordinates of the light location on the horizontal axis and vertical axis respectively.

$R_{light}$ calculation

The calculation of the light distance $R_{light}$ is done using the transformation matrix T from the camera 314 reference frame coordinates system (Camera CS) to the boat 1 reference frame coordinates system (Boat CS) where : $R_{light} = \|T(P_{light})\|$.

P calculation

The relation between the real distance R and the light distance $R_{light}$ can be defined using the camera 314 mounting model and parameters, and depends on the height h of the masthead light source 51 and the height H of the camera 314 on the mast 20. Given that the height H of the camera 314 is a fixed parameter, the light distance $R_{light}$ can be written as a function of the real distance R: $R_{light} = G_h(R)$ or, reciprocally, $R = G_h^{-1}(R_{light})$. Therefore, the calculation of the light distance $R_{light}$ and its projection back from the boat 1 reference frame coordinate system (Boat CS) to the camera 314 reference frame coordinates system (Camera CS), allows to calculate the real distance R and to estimate the real position P.

The distance $\|P_{light} - P\|$ represents the error in number of pixels, between the light position and the real object position as a function of the distance R, depending on the height h. Let's write: $\|P_{light} - P\| = F_h(R)$.

Assuming that the masthead light source 51 is mounted on top of the vessel 5, this distance results only from the vertical axis of the image (from top to bottom), respectively P(0) and $P_{light}(0)$, and the value of $P_{light}(0)$ is always less than P(0). This assumption on light source position allows to add an additional information layer to the autopilot software later. Also, it is safer to assume the vessel 5 is closer than reality, which means that the light source 51 is mounted higher.

The equation to obtain the real position P of the vessel 5 from the light position $P_{light}$ is:

$$P = (P(0), P(1)) = (P_{light}(0) + F_h(G_h^{-1}(R_{light})), P_{light}(1)) \qquad [1],$$

where P(1) and $P_{light}(1)$ are the values of P when projected on the horizontal axis of the image (these values are assumed to be equal).

Given that the height "h" in dark images cannot be determined, it may be fixed to the maximum light height in open sea, which is written "$h_{max}$". In order to compensate, the error term can be multiplied by a factor $0 \leq \alpha \leq 1$ that will depend on the average intensity of the light is the detected pixel area "$I_{av}$", the size of the light "S", and the distance of the light from the horizon height, which is calculated using the raw and pitch provided by the sensor 315 of the camera module 310 :

$$P(0) = P_{light}(0) + \alpha(I_{av}, S, P_{light}).F_{hmax}(G_{hmax}^{-1}(R_{light})) \qquad [2].$$

The bias factor $\alpha$ satisfies advantageously the following condition: the brightest and the biggest the light is, the more likely it is to be closer than estimated, especially when the position is closer to the horizon height. The term "$F_{hmax}$" follows an exponential model, $F_{hmax}(x) = \exp(b/x) - 1$, and is optimised using theoretically generated values. Alternatively, the term $F_{hmax}$ could also be estimated using a polynomial model.

The calculation of the real distance on the horizontal axis P(0) (equation [2]) allows therefore calculating the real position P (equation 1).

R calculation

The real distance can thus be estimated using the transformation matrix T determined at step S4: $R = \|T(P)\|$.

To sum up, the distance estimation algorithm at night, first creates a transformation matrix T from the camera 314 reference frame CS to the boat's 1 reference frame coordinate system (Boat CS), then calculates the light distance $R_{light}$ using the light position $P_{light}$ and said transformation matrix T. Using the equations [1] and [2], a new estimation of the real position "P" of the vessel 5 is made, which is then projected in the boat 1 reference frame coordinate system (Boat CS) to calculate an estimation of the real distance R of the vessel 5 with regard to the boat 1.

Polar angles calculation (step S6)

Given that the light position $P_{light}$ in the image is not an indicator of the real position P of the vessel 5, the transformation matrix T, which is the mapping function from the image to the boat 1 reference frame coordinate system, is used to calculate the polar angle, called "$Phi_{light}$", from the boat 1 to the light source 51 for each image of the sequence of images. In other words, instead of performing the projection into the Cartesian coordinates, it is done using polar coordinates ($Phi_{light}$; $R_{light}$)= $T(P_{light})$. More precisely, applying the transformation matrix T to the light position $P_{light}$ in polar coordinates allows to determine both the light polar angle $Phi_{light}$ between the boat 1 and light source 51 and the light distance $R_{light}$ (which is given by the norm of the transformation matrix T of the light position $P_{light}$ as described previously : $R_{light} = \|T(P_{light})\|$). The real polar angle Phi between the boat 1 and the vessel 5 is then considered to be equal to $Phi_{light}$ as the light source 51 moves angularly with the vessel 5, said light source 51 being fixed on the vessel 5.

Course direction estimation (step S7)

The comparison of the polar angle Phi to the light source in a sequence of real-time images allows to derive a series of polar angles which enables to estimate the angular speed (or velocity) and the course direction (left, right or static) of the light sources 51, 52, 53 and therefore of the vessel 5. The angular speed of the vessel 5 is calculated with reference to the boat 1 reference frame coordinate system (Boat CS), and indicates at what speed the vessel 5 is heading towards or away from the course of the boat 1.

Given a sequence of frames synchronized with the sensor 315 (raw, pitch, yaw) and the boat 1 bus data flow (timestamp, location of the boat 1, velocity of the boat 1 and rotation information between rotation angle of the boat 1 relatively to its previous heading), for each processed image (or frame) taken at a timestamp "t", a set of detected light sources can be described as follows: { L(t) = (Phi(t),R(t)) } to each a polar angle "Phi(t)" is calculated and a distance "R(t)" is estimated as previously described.

For each light source 51, 52, 53, the first derivative of the polar angle Phi, which is the angular velocity of the light source 51, 52, 53 in the boat 1 reference frame coordinate system (Boat CS): d(Phi) = (Phi(t) - Phi(t - dt)) / dt, where dt is the time step between the current frame F and the previous one, can be calculated. The sign of d(Phi) indicates whether the light source is heading towards or away from the course of the boat 1 (i.e. the $x_b$ axis of Boat CS on Figure 4).

In a similar way, the derivate of the real distance R with regard to time d(R) can be calculated. Its sign indicates whether the vessel 5 is heading towards the boat 1 or moving away, in order to add an additional, but less reliable, security layer, given the assumptions that at least one light source is mounted on the top of the vessel 5.

The linear speed V of the vessel 5 is the magnitude of the velocity vector, which is the derivative of the estimated position P with regard to time t. The derivative d(L(t)) of the estimated position P is given by : d(L(t))=(R(t).d(Phi), d(R)), wherein L is the real position of the vessel 5 in the boat 1 reference frame coordinate system (Boat CS) in polar coordinates. Thus, the linear speed V of the vessel 5 is given by $V = \text{sqrt} ((R(t).d(Phi))^2 + d(R)^2)$.

Object identification (step S8)

Advantageously, the vessel 5 may be identified using its estimated course direction and/or its speed and/or the number of light(s) 51, 52, 53 and/or the configuration/positions of the lights 51, 52, 53 of the vessel 5 and/or the determined colour of the light(s) 51, 52, 53 of the vessel 5.

More precisely, the information about the different light sources 51, 52, 53 may be kept in a buffer of a memory zone of the processing module 320. Using the history of the detected light 51, 52, 53, for which e.g. at least three detections within seven iterations corresponding to nearly three seconds of navigation, the different features of the vessel 5 (colour of light sources 51, 52, 53, course direction, speed) can be aggregated and compared to a table in order to gain information about the type of the luminous maritime obstacle, through its behaviour. Said table may store in particular the features of each type of vessel 5 according to the navigational light rules of IALA (International Association of Marine Aids to Navigation and Lighthouse Authorities). Positions and colours of the light sources 51, 52, 53 may be compared with the table stored in a memory of the processing module 320 to identify the vessel 5.

Risk detection (step S9)

The processing module 320 evaluates the risk of collision between the boat 1 and the vessel 5 based on the estimation of the course direction of the vessel 5, and when available, the identification of the vessel 5, the angular speed of the vessel, the linear speed of the vessel 5. The information about the vessel's 5 behaviour, whether it is identifiable or not, may advantageously be used to evaluate the risk of the collision.

For example, the processing module 320 may determine that a collision is likely if the vessel moves towards the course of the boat 1 and unlikely if the vessel moves away from the course of the boat 1.

Alarm triggering (step S10)

Advantageously, the processing module 320 may trigger an alarm when a risk of collision with the vessel 5 has been detected. The alarm may be a sound or a display alarm or any humanly-detectable alarm or a command sent automatically to the autopilot of the navigation module 330.

Collision Avoidance (step S11)

The vessel 5 may be avoided when a risk of collision has been detected, either manually by the skipper consequently to a humanly-detectable alarm or automatically by the autopilot consequently to an alarm command sent by the processing module 320 and received by the navigation module 330.

**Claims**

1. A method of detecting a risk of collision between a boat (1) and a luminous object (5) in a water area (2) using a camera module (310) mounted on said boat (1), said camera module (310) comprising a RGB camera (314), said boat (1) being **characterized by** its course, said method comprising the steps of:

   - generating (S1) at least one sequence of images using said camera (314),
   - detecting (S2) at least one light source (51, 52, 53) in the images of the at least one sequence of images, said at least one light source (51, 52, 53) being mounted on said luminous object (5),
   - calculating (S6) a series of polar angles between the boat (1) and the at least one light source (51, 52, 53) using the images of the at least one sequence of images,
   - estimating (S7) the course direction of the object (5) with regard to the boat (1) by deriving said series of calculated polar angles with respect to time,
   - detecting (S9) a risk of collision between the boat (1) and the object (5) when the estimated course direction of the object (5) leads said object (5) towards the course of the boat (1).

2. The method according to claim 1, said method comprising, consequently to the risk detection, a step (S10) of triggering an alarm.

3. The method according to any of the preceding claims, said method comprising a step (S11) of avoiding the object (5) based on the estimated course direction of said object (5).

4. The method according to any of the preceding claims, wherein the series of polar angles is calculated using a rotation matrix from an image plan of the images to a boat reference frame coordinate system of the boat (1) for each image of the sequence of images.

5. The method according to any of the preceding claims, said method comprising, before the step of calculating a series of polar angles, a step (S5) of estimating the distance between the boat (1) and the at least one light source (51, 52, 53) using the images of the at least one sequence of images.

6. The method according to the preceding claim, wherein the estimation of the distance between the boat (1) and the at least one light source (51, 52, 53) comprises:

   - determining the position of the at least one light source (51, 52, 53) in pixel coordinates in an image of the sequence of images,
   - calculating the distance of the at least one light source (51, 52, 53) by applying a transformation matrix from a camera's (314) reference frame coordinate system to a boat's (1) reference frame coordinate system to the determined position,
   - calculating the real position of the object (5) using the calculated distance and the determined position,
   - estimating the real distance between the boat (1) and the object (5) using said calculated real position.

7. The method according to any of claim 5 or 6, wherein the estimation (S6) of the course direction of the object (5) with regard to the boat (1) comprises estimating the angular speed of the object (5) using said series of calculated polar angles.

8. The method according to any of the preceding claims, said method comprising a step (S8) of identifying the object (5).

9. A system (30) for detecting a risk of collision between a boat (1) and a luminous object (5) in a water area (2), said system (30) being intended to be mounted on-board said boat (1) and comprising a camera module (310) and a processing module (320) connected to said camera module (310) via a communication link, said camera module (310) comprising a RGB camera (314) configured to generate at least one sequence of images using said camera (314) and send said generated at least one sequence of images to the processing module (320), said boat (1) being **characterized by** its course, said processing module (320) being configured to:

   - detect at least one light source (51, 52, 53) in the images of the sequence of images, said at least one light source (51, 52, 53) being mounted on said object (5),
   - calculate a series of polar angles between the boat (1) and the at least one light source (51, 52, 53) using the images of the sequence of images,
   - estimate the course direction of the object (5) with regard to the boat (1) by deriving said series of calculated polar angles with respect to time,
   - detect a risk of collision between the boat (1) and the object (5) when the estimated course direction of the object (5) leads said object (5) towards the course of the boat (1).

10. The system (30) according to the preceding claim, wherein the processing module (320) is configured to trigger an alarm.

11. The system (30) according to any of claims 9 or 10, wherein the processing module (320) is configured to automatically avoid the object (5) based on the estimated course direction of said object (5).

12. The system (30) according to any of claims 9 to 11, wherein the processing module (320) is configured to calculate the polar angles using a rotation matrix from the image plan to a boat reference frame coordinate system for each image of the sequence of images.

13. The system (30) according to any of claims 9 to 12, wherein the processing module (320) is configured to estimate the distance between the boat (1) and the at least one light source (51, 52, 53) using the images of the sequence of images.

14. The system (30) according to the preceding claim, wherein the processing module (320) is configured to estimate the angular speed of the object (5) using said series of calculated polar angles.

15. A boat (1) comprising a system (30) according to any of claims 9 to 14.

**FIGURE 1**

**FIGURE 2**

**FIGURE 3**

**FIGURE 4**

**FIGURE 5**

**FIGURE 6**

Generating images — S1

Detecting light sources — S2

Determining colour — S3

T — S4

Estimating distance — S5

Calculating polar angles — S6

Estimating course direction — S7

Identifying object — S8

Detecting risk — S9

Triggering alarm — S10

Avoiding collision — S11

**FIGURE 7**

Europäisches
Patentamt

European
Patent Office

Office européen
des brevets

# EUROPEAN SEARCH REPORT

Application Number

EP 19 21 1016

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 883 655 A1 (SEA ON LINE SA [FR]) 29 September 2006 (2006-09-29) * page 1, lines 3-9 * * page 3, lines 25-32 * * page 6, lines 3-7 * * page 10, lines 21-24 * * page 17, lines 17-20 * * page 18, lines 7-12,29-30 * * page 19, lines 14-18,22-35 * * page 22, lines 3-17 * * figures 6A,6B * * page 23, lines 2-6 * * page 24, lines 62-24 * * page 20, lines 5-12 * | 1-15 | INV. G08G3/02 |
| A | US 2016/125739 A1 (STEWART PETER A [GB] ET AL) 5 May 2016 (2016-05-05) * the whole document * | 3,11 | |
| A | CN 203 732 065 U (SECOND INST OCEANOGRAPHY SOA) 23 July 2014 (2014-07-23) * the whole document * | 4,6,12 | |
| A | KR 101 600 820 B1 (NEOCARTEK CO LTD [KR]) 8 March 2016 (2016-03-08) * the whole document * | 6 | TECHNICAL FIELDS SEARCHED (IPC) G08G |

The present search report has been drawn up for all claims

| Place of search | Date of completion of the search | Examiner |
|---|---|---|
| The Hague | 20 May 2020 | Thareau-Berthet, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 1016

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2020

| Patent document cited in search report | | Publication date | Patent family member(s) | Publication date |
|---|---|---|---|---|
| FR 2883655 | A1 | 29-09-2006 | NONE | |
| US 2016125739 | A1 | 05-05-2016 | NONE | |
| CN 203732065 | U | 23-07-2014 | NONE | |
| KR 101600820 | B1 | 08-03-2016 | NONE | |

EPO FORM P0459

For more details about this annex : see Official Journal of the European Patent Office, No. 12/82